Europäisches Patentamt

European Patent Office

Office européen des brevets

(19)

(11) **EP 0 693 846 A2**

(12) **EUROPEAN PATENT APPLICATION**

(43) Date of publication:
**24.01.1996 Bulletin 1996/04**

(51) Int Cl.6: **H04M 3/00**, H04M 19/00,
**H04B 3/23**

(21) Application number: 95304364.3

(22) Date of filing: **21.06.1995**

(84) Designated Contracting States:
**DE FR GB IT SE**

(30) Priority: **24.06.1994 US 264978**

(71) Applicant: **HARRIS CORPORATION**
**Melbourne, FL 32919 (US)**

(72) Inventors:
  • **Ludeman, Christopher**
    **Palm Bay, Florida 32905 (US)**
  • **Whitney, Donald K., Jr.**
    **Melbourne, Florida 32904 (US)**

(74) Representative: **van Berlyn, Ronald Gilbert**
**London NW3 6JG (GB)**

(54) **Telephone subscriber line interface circuit and method**

(57)    A subscriber line interface circuit (SLIC) for a telephone system in which a 4-wire transmission path transmit signal gain, a 4-wire transmission path receive signal gain, and a 2-wire impedance matching correction are mutually independent. Hybrid circuitry for the SLIC includes a synthesized impedance for controlling 2-wire return loss that is grounded. Impedance matching and transhybrid echo cancellation may be is carried out in an integrated circuit with the SLIC circuitry.

*FIG. 5*

EP 0 693 846 A2

## Description

The present invention relates to a subscriber line interface circuit for a telephone system, and more particularly to a current mode subscriber line interface circuit in which the four-wire transmission path transmit signal gain, the four-wire transmission path receive signal gain, and the two-wire impedance matching are mutually independent.

A telephone subscriber line interface circuit (SLIC) connects a balanced two-wire transmission path (the tip and ring paths to and from the individual subscriber's telephone handset) with an unbalanced four-wire transmission path (the separate two-wire transmit and receive signal paths to and from the telephone central switching matrix). SLICs perform various functions, including battery feed, overvoltage protection, ringing, signaling, hybrid, and testing.

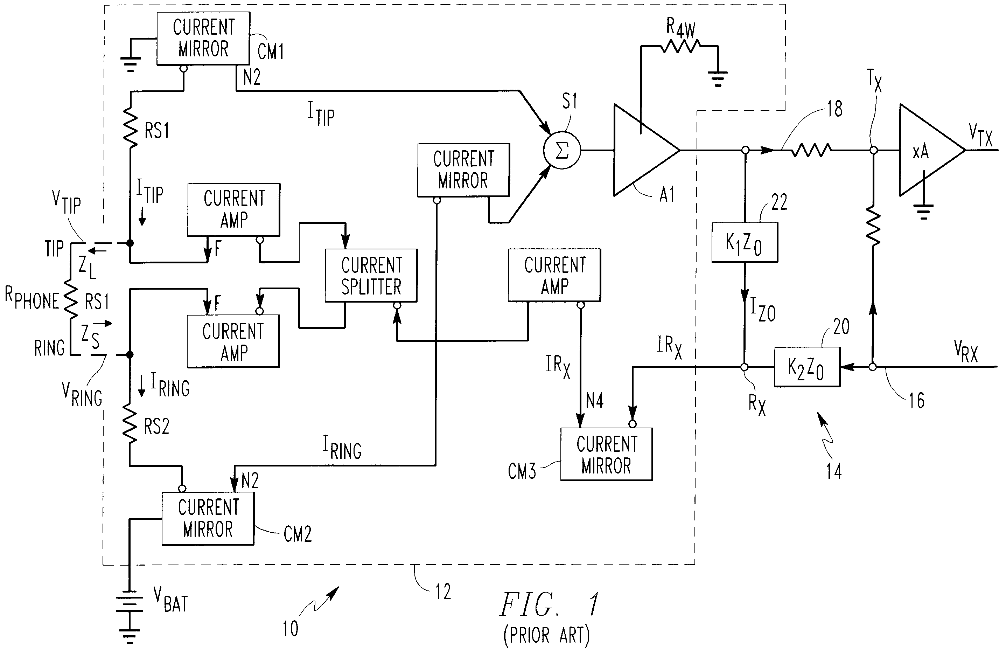

SLIC operation is known and need not be considered in detail. By way of explanatory example, and with reference to the prior art SLIC shown in Figure 1, a current mode SLIC 10 (a SLIC that processes the currents related to the signals in the transmission paths, rather than the voltages) uses current information available in the tip and ring voltage sensing resistors RS1 and RS2 at the two-wire or subscriber side of the SLIC.

Current mode SLICs typically use current mirrors that provide a copy of the incoming signal. Current mirrors are well known as disclosed in the specification of U.S. Patent No. 4,203,012.

The current information is provided to a hybrid circuit 12 that detects incoming signals and sends them in the right direction. The hybrid circuit 12, in combination with external circuitry indicated generally at 14 connected to the four-wire side of the SLIC, provides appropriate amplification, transhybrid echo cancellation, and impedance matching.

The gain of the "receive" signal (the signal passing through the SLIC to the subscriber) is also referred to as "four-wire to two-wire gain", and is $V_{TR}/V_{RX}$, where $V_{TR}$ is $V_{TIP} - V_{RING}$. The receive signal $V_{RX}$ is converted to current, mirrored, amplified, split, amplified again and applied at the tip and ring connections for transmission to the subscriber.

The gain of the "transmit" signal (the signal passing through the SLIC from the subscriber to the four-wire transmission line) is also referred to as the "two-wire to four-wire gain", and is $V_{TX}/V_{TR}$, where $V_{TR}$ is the voltage across $R_{PHONE} + R_{WIRE}$. To provide a transmit signal, the tip and ring currents are mirrored, combined, and converted to a voltage by a factor $R_{4W}$.

Two wire return loss is the delayed return of the two-wire signal (the speaker's voice at the subscriber handset) back to the speaker through the two-wire transmission path and is caused by an impedance mismatch at the tip-ring interface. Transhybrid echo is the receive signal appearing on the transmit output as a consequence of being measured on the 2-wire lines and is

$V_{TX}/V_{RX}$.

In operation, the tip and ring voltages at the telephone line terminals are converted to tip and ring currents by imposing the voltages across resistors RS1 and RS2, and the currents are thereafter provided to current mirrors CM1 and CM2 where they are copied. The a.c. tip current, TIP/ is proportional to the voltage at the tip side of the telephone line, and the a.c. ring current, I RING /is proportional to the voltage at the ring side of the subscriber's telephone line.

$$I_{TIP} = V_{TIP}/RS1 \qquad (1)$$

$$I_{RING} = V_{RING}/RS2 \qquad (2)$$

The hybrid circuit 12 is desirably provided in an integrated circuit to reduce size and increase reliability. The external circuitry 14 have not generally been part of prior art integrated circuits (i.e., they are "off-chip") because impedance matching requires time and temperature stability and the impedance being matched is off-chip. More significantly, the impedance is generally complex and the implementation of large value capacitors in silicon is not practical. Many of the prior art resistive elements (e.g., RS1, RS2, and the resistor $R_{4W}$) are part of the integrated circuit since no change in them is anticipated and they do not usually play a critical role in impedance matching.

Two of the more complex problems faced in the design and operation of current mode SLICs are transhybrid echo cancellation and impedance matching. As earlier indicated, imperfect impedance matching results in the delayed return of the two-wire signal (the speaker's voice at the subscriber handset) back to the speaker through the two-wire transmission path. Transhybrid echo is caused when the signal received from the four-wire circuit at 16 passes through the SLIC to the four-wire transmit signal transmission path 18. Transhybrid echo has been conventionally cancelled off-chip by summing a portion of the received signal with the transmitted signal to effect cancellation of the component of the transmitted signal which has been passed through the SLIC from the received signal, the transmit and received signals being generally of opposite phase or polarity to effect cancellation.

Impedance matching reduces reflection of the transmitted signal. The two-wire subscriber line is a transmission path with a load impedance $Z_L$ typically complex with 100's of ohms (e.g., 600 to 9000$\Omega$). The SLIC connected to the subscriber's line desirably has a matching impedance to prevent two-wire reflection or echo, also known as "two-wire return".

Figure 1 shows impedance matching has been carried out off-chip by synthesizing a two-wire impedance $Z_s$ that approximates the load impedance $Z_L$ as seen at the tip and ring terminals. The synthesized impedance factor $K_1Z_0$ may be provided by an impedance element 20 connecting the transmit path 18 and the receive path 16.

The magnitude of the receive signal into Rx is the sum of the signal in the impedance element 22 and the impedance element 20. The gain adjustment $K_2Z_0$ from impedance element 20 and the impedance setting factor $K_1Z_0$ are thus necessarily related, with typically $K_1>K_2$.

The dependency of the receive signal gain adjustment on the impedance setting factor, and the fact that they are complex functions, have contributed to the difficulty in independently changing gain and two-wire impedance matching. These factors have also limited the ability to vary the gain adjustment and the impedance matching factor because changes are overly complex. Hence, values for impedance matching and gain are preset based on compromises in performance.

An object of the present invention to obviate many of the problems of the prior art and to provide a SLIC and method of operation, and in which a four-wire transmission path transmit signal gain, a four-wire transmission path receive signal gain, and two-wire impedance matching are mutually independent.

A further object is to provide a novel SLIC and method of operation in which the synthesizing impedance for controlling two-wire return loss is a two port network with one port grounded.

Another object is to provide a novel SLIC and method of operation in which an impedance matching circuit provides a synthesized impedance by increasing the gain of a combination of tip and ring currents in inverse relation to the value of a grounded synthesizing network impedance $Z_O$, and in which the gain of a receive signal in the four-wire transmission path is independent of impedance matching and transmit gain.

The present invention includes a SLIC subscriber line integrated circuit connected between a 2-wire subscriber transmission path and a 4-wire transmission path, said SLIC comprising a combiner for combining a receive signal current with tip and ring signal currents and an impedance matching circuit, an impedance matching circuit referenced to ground potential through an impedance preselected to approximate the anticipated impedance of a 2-wire transmission path to be connected to the SLIC, and a current mirror for increasing the gain of said combiner in inverse relation to the value of said impedance, and mutually independent means for independently adjusting (a) the 4-wire transmit signal gain, (b) the 4-wire receive signal gain, and (c) the 2-wire impedance matching circuit.

The invention also includes a method of matching impedance across a SLIC comprising the steps of:

(a) combining tip and ring signal currents;

(b) thereafter modifying the gain of the combined current

as a function of a predetermined impedance, in which the predetermined impedance is grounded, and the relationship between the gain of the combined current and the predetermined impedance preferably, is inverse.

The invention will now be described by way of example, with reference to the accompanying drawings in which:

Figure 1 is a schematic functional block and circuit diagram of a prior art SLIC hybrid with associated components illustrating impedance matching, transmit gain adjustment, and receive gain adjustment features.

Figure 2 is a functional block diagram of a prior art device illustrating the impedance matching functions of the SLIC of Figure 1.

Figure 3 is a functional block diagram of one embodiment of the present invention illustrating the impedance matching functions.

Figure 4 is a functional block diagram of a prior art device illustrating the transhybrid echo cancellation functions of the SLIC of Figure 1.

Figure 5 is a functional block diagram of one embodiment of the present invention illustrating the transhybrid echo cancellation functions.

Figure 6 is a functional block diagram of one embodiment of the improved SLIC hybrid circuitry of the present invention showing the integration of the circuits of Figures 3 and 5.

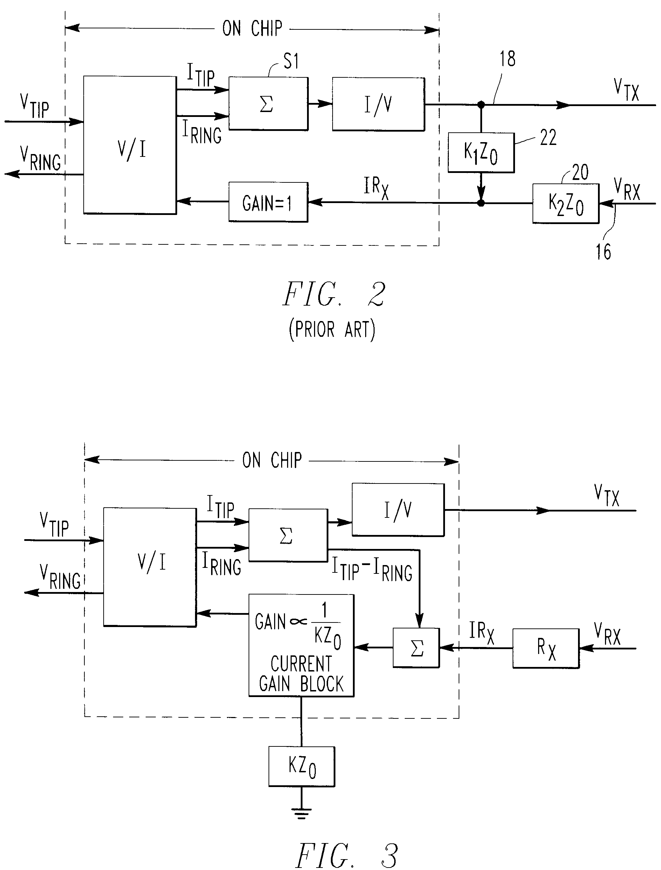

An appreciation of the SLIC of the present invention will be more easily realized by first separately considering two of the primary improvements provided by the circuitry; impedance matching and transhybrid echo cancellation. Figures 2-5 used in the separate discussions that follow depict the features of the circuitry.

Impedance matching in the improved SLIC circuitry described herein is independent of the receive gain and transmit gain adjustment and is moved off-chip for ready access. The comparable prior art circuitry is depicted in functional blocks in Figure 2. As seen therein, the gain correction of the receive signal $K_2Z_O$ and the synthesizing impedance factor $K_1Z_0$ are both functions of $Z_0$ and thus a change in one affects the other. They are both off-chip.

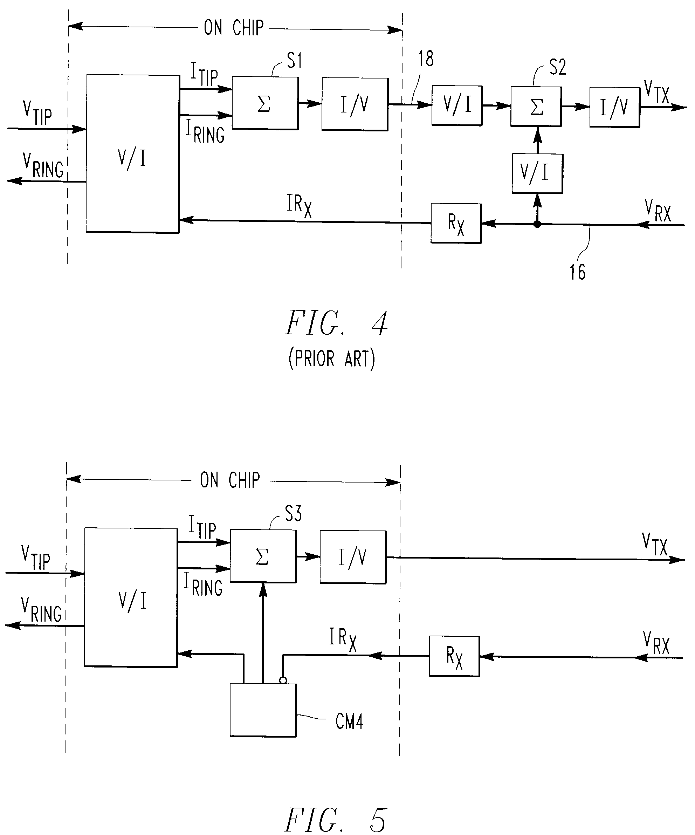

In contrast, and with reference to Figure 3, the impedance matching circuitry herein uses a simple off-chip resistive element $R_X$ that is independent of $Z_O$ for receive signal gain adjustment. The synthesizing impedance factor $KZ_O$ is provided by another simple off-chip element that is grounded at one end and allows $R_X$ to be independent of $Z_O$ and $R_{4W}$. The gain of the impedance matching function factor is inversely proportional to $Z_O$.

Transhybrid echo cancellation is depicted in the functional block diagram of Figure 4. It is conducted off-chip using a current combiner S2 with appropriate voltage-current converters. In contrast, transhybrid echo cancellation in the improved circuitry of Figure 5 is carried out on-chip by providing a separate copy of the receive signal current $IR_X$ to the combiner S3 from a current mirror CM4.

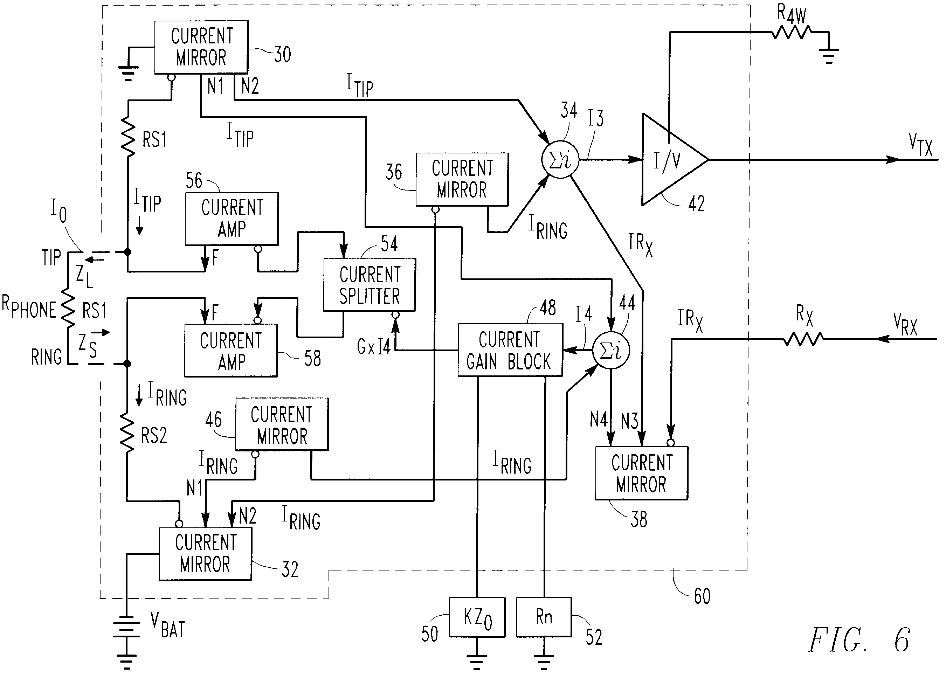

The circuitry for performing both impedance matching and transhybrid echo cancellation may be more clearly seen in Figure 6. In operation, the tip and ring voltages at the telephone line terminals are converted to tip and ring currents by imposing the voltages across resistors RS1 and RS2, and the currents are thereafter provided to current mirrors 30 and 32 where they are copied twice. The a.c. tip current, $I_{TIP}$ is proportional to the voltage at the tip side of the telephone line, and the a.c. ring current, $I_{RING}$, is proportional to the voltage at the ring side of the telephone line, as in equations (1) and (2) above. The proportionality may be different in the $I_{TIP}$ and $I_{RING}$ copies by the factor N1 and N2 as indicated.

The N2 tip current is combined in combiner 34 with the N2 ring current after mirroring in current mirror 36 to effect the addition or recombining in the combiner 34. This current I3 is converted to a voltage amplified by a factor $R_{4W}$ in the amplifier 42 and passed to the four wire circuit as the transmit signal $V_{TX}$.

To cancel transhybrid echo, i.e., the presence of the received signal in the transmit signal, a copy of the receive signal scaled by a factor N3 may be provided from current mirror 38 to combiner 34 to effect cancellation of the received signal from the transmit signal. The combiner 34 provides a combined current signal I3 to a current-to-voltage converter 42 where the signal may be amplified as appropriate before being passed to the four-wire transmission lines as the transmit signal voltage $V_{TX}$.

$$I3 = (N2 \times I_{TIP}) + (N2 \times I_{ring}) - (N3 \times IR_x) \quad (3)$$

The receive signal is processed by converting the information in the receive signal voltage to receive signal current $IR_x$ with the resistor $R_x$. Current mirror 38 makes two copies of $IR_x$, one for transhybrid echo cancellation discussed above, and the other for four-wire to two-wire transmission.

The combiner 44 combines three currents: i.e., a copy of $I_{TIP}$ from mirror 30 that may be scaled by a factor N1, a copy of $I_{RING}$ from mirror 32 that may be scaled by a factor N1 (the copy from mirror 32 may be reversed as needed in mirror 46 so that $I_{TIP}$ and $I_{RING}$ have the appropriate polarity), and the second copy from mirror 38 that may be scaled by a factor N4. The combined currents from combiner 44 form the current I4 used in impedance matching, and 4W to 2W transmission.

$$I4 = (N1 \times I_{TIP}) + (N1 \times I_{RING}) - (N4 \times I_{RX}) \quad (4)$$

The current I4 is provided to current gain amplifier 48 where the current gain is changed by a factor that is related to the synthesizing impedance setting $Z_O$. The current gain amplifier 48 may receive A, the input signal I4, which is modified by a synthesizing impedance factor $KZ_O$ from grounded impedance element 50 and a resistance Rn from resistive element 52. The gain of the current gain amplifier 48 is:

$$G = I_{OUT}/I_{IN} = Rn/KZ_O \quad (5)$$

Rn is desirably fixed as a change in Rn may affect $Z_O$. However, $Z_O$ may change without affecting Rn.

The output from the current gain amplifier 48, G x I4, may be provided to current splitter 54, with each part being amplified by a factor F in current amplifiers 56 and 58 passed to the two-wire load.

Because the impedance element 50 that provides $KZ_O$ is not attached to the input resistor Rx, a change in $Z_O$ will not affect Rx as in prior art circuits. The grounding of one end of $Z_O$ promotes simplicity and permits switching of impedance elements. Thus, the synthesized impedance may be changed independently of the receive signal gain and transmit signal gain. This independence allows considerable latitude in the applicability of a SLIC with this circuitry, as the telephone system impedance may vary over time or from locality to locality by adjusting a single two-port, one end grounded network rather than adjusting two two-port non-grounded networks. For example, the element 50 may be switched into and out of contact as needed, and may be selected from among a set of such elements, each with a predetermined impedance. Conversely, the independence of $R_X$, $R_{4W}$ and $Z_O$ also allows the receive and transmit signal gain to change as needed without affecting impedance.

The components used in the improved circuitry may be conventional, although components adaptable to integrated circuits are desirable to take advantage of the ability to match components (e._q., in the current mirrors) and to improve reliability. For example, when integrated circuit components are used, a SLIC hybrid circuit 60 (enclosed within the dashed lines in Figure 6) may be a single integrated circuit. The components that may provide inputs with variable values may be off-chip, although this is not required. For example, $R_X$ and $KZ_O$ may be off-chip so that they may be selectively changed when installing the SLIC or during operation in response to changing operating conditions.

As will be appreciated, the circuit of Figure 6 uses a single, ground referenced, impedance network to control two-wire return loss, instead of the floating networks of the prior art. A synthesized two-wire impedance may be selected independently of receive and transmit gain by using switches to ground. Receive and transmit gain may be set by a single resistor, instead of the complex impedance networks for the complex impedance loads of the prior art.

A demonstration of the simplification of the selection of components afforded by the improved circuitry herein will be shown with reference to the component designations and multiplication factors of Figure 6.

The synthesized impedance $Z_O$ may be calculated as follows:

$$Z_s = \frac{(RS)(KZ_0)}{(Rn)(FN1)} \quad (6)$$

The four-wire to two-wire receive gain may be calculated as follows:

$$G_{4W\text{-}2W} = \frac{(RS)(N4)(ZL)}{(RX)(N1)(Z_s+ZL)} \qquad (7)$$

The two-wire to four-wire transmit gain may be calculated as follows:

$$G_{2W\text{-}4W} = V_{TX}/V_{TR} = \frac{(R4w)N2}{RS} \qquad (8)$$

The transhybrid echo cancellation (four-wire to four-wire gain) may be calculated as follows:

$$G_{4W\text{-}4W} = V_{TX}/V_{RX} = \frac{(R4w)(N4N2)\,ZL(\text{-}N3)}{(RX)(N1)(Z_s+ZL)} \qquad (9)$$

To demonstrate the simple substitution of components herein, assume the following values:
$N1 = N2 = N3 = 1$,
$N4 = 2$
$F = 400$,
$Rn = 25k\Omega$, $RS = 100k\Omega$
$ZS = ZL = 600\Omega$

Then, the components with the following values may be used to achieve the gains indicated:
for $G_{4W\text{-}2W} = G_{2W\text{-}4W} = 0$ dB, $G_{4W\text{-}4W}$, = -inf dB
$KZ_0 = 60k\Omega$, $R_X = 100k\Omega$, and $R_{4W} = 100k\Omega$;
for $G_{4W\text{-}2W} = -6$ dB, $G_{2W\text{-}4W} = 0$ dB, $G_{4W\text{-}4W}$ = -inf. dB
$KZ_0 = 60k\Omega$, $R_X = 200k\Omega$, and $R_{4W}$ 100k$\Omega$;
for $G_{4W\text{-}2W} = 0$ dB, $G_{2W\text{-}4W} = -6$ dB, $G_{4W\text{-}4W}$ -inf. dB
$KZ_0 = 60k\Omega$, $R_X = 100k\Omega$, and $R_{4W} = 200k\Omega$;

As is apparent, gain may be changed by a simple substitution of resistors, without affecting impedance matching.

A subscriber line interface circuit (SLIC) for a telephone system in which a 4-wire transmission path transmit signal gain, a 4-wire transmission path receive signal gain, and a 2-wire impedance matching correction are mutually independent. Hybrid circuitry for the SLIC includes a synthesized impedance for controlling 2-wire return loss that is grounded. Impedance matching and transhybrid echo cancellation may be is carried out in an integrated circuit with the SLIC circuitry.

**Claims**

1. A SLIC subscriber line integrated circuit connected between a 2-wire subscriber transmission path and a 4-wire transmission path, said SLIC comprising a combiner for combining a receive signal current with tip and ring signal currents and an impedance matching circuit, the impedance matching circuit referenced to ground potential through an impedance preselected to approximate the anticipated impedance of a 2-wire transmission path to be connected to the SLIC, and a current mirror for increasing the gain of said combiner in inverse relation to the value of said impedance, and mutually independent means for independently adjusting (a) the 4-wire transmit signal gain, (b) the 4-wire receive signal gain, and (c) the 2-wire impedance matching circuit.

2. A SLIC as claimed in claim 1, including connections between a 2-wire subscriber transmission path and a 4-wire transmission path, said SLIC comprising a circuit for impedance matching including a grounded impedance for controlling 2-wire return loss.

3. The SLIC as claimed in claim 1 or 2 wherein said grounded impedance means is preselected to approximate the anticipated impedance of the 2-wire circuit to which it is connected, and the combiner for combining a receive signal current from the 4-wire line to which connected with the tip and ring currents of the 2-wire circuit to which connected, and means connected to said grounded impedance for increasing the gain of said combiner in inverse relation to the value of said grounded impedance.

4. A SLIC as claimed in Claim 1 or 2 wherein said SLIC includes a variable gain amplifier, said grounded impedance is electrically connected to said variable gain circuit, with said variable gain amplifier being an integrated circuit and said grounded impedance is a discrete circuit component, preferably said variable gain amplifier is independent of said converting means.

5. A SLIC as claimed in Claim 1 wherein said grounded impedance is preselected to approximate the anticipated impedance of the 2 wire transmission path to which connected, and said SLIC further comprises means for converting a receive signal voltage from the 4-wire transmission path to which it is connected to a receive signal current, a first combiner for combining the receive signal current and the tip and ring currents from the 2-wire transmission paths to which connected, and a current gain amplifier connected to said grounded impedance for increasing the gain of said first combiner in inverse relation to the value of said impedance, said grounded impedance is independent of said means for converting and preferably said means for combining and said means for increasing the gain of said combiner are in the same integrated circuit.

6. A SLIC as claimed in any one of claims 1 to 5 including the 4-wire transmission path and the 2-wire transmission path comprising a feedback circuit for providing an impedance selected to approximate the anticipated impedance of the 2-wire transmission path so as to reduce 2-wire transmission path return loss, and resistive means external to said feedback circuit for adjusting the gain of a receive signal in the 4-wire transmission path.

7. A SLIC as claimed in any one of Claims 1 to 6 wherein said SLIC includes transhybrid echo cancellation means comprises a second combiner for combining the receive, and tip and ring currents, and means for converting the output from said second combiner to a 4-wire transmission path transmit voltage.

8. A method of matching impedance across a SLIC comprising the steps of:

(a) combining tip and ring signal currents;

(b) thereafter modifying the gain of the combined current as a function of a predetermined impedance, in which the predetermined impedance is grounded, and the relationship between the gain of the combined current and the predetermined impedance preferably, is inverse.

9. A method as claimed in Claim 8 wherein the steps of current combining and gain modification are carried out in an integrated circuit.

10. A method of transhybrid echo cancellation in an integrated circuit SLIC comprising the steps of:

(a) combining a 4-wire receive signal current with 2-wire tip and ring signal currents within the SLIC; and

(b) providing a 4-wire transmit signal voltage from the combined currents, in which the step of providing the 4-wire transmit signal voltage is carried out within the SLIC integrated circuit, and the amplitude of the transmit signal voltage is a function of a discrete resistive circuit component.

11. A method as claimed in Claim 10 including the step of controlling 2-wire return loss in a 2-wire transmission path connected to the SLIC by controlling the value of an impedance preselected to approximate the anticipated impedance of the 2-wire transmission path, and the step of controlling 2-wire return loss includes the step of increasing the gain of a combination of the 2-wire tip and ring currents in inverse relation to a value of a preselected impedance.

12. A SLIC between a balanced 2-wire transmission path and an unbalanced 4-wire transmission path comprising two current mirrors, each for converting a tip and ring signal voltage on the 2-wire transmission path into a tip and ring signal current, two combiners, each for combining a receive signal current from the 4-wire transmission path with the tip and ring signal current from one of said two current mirrors, a converter for converting a current output from a first one of said two combiners into a SLIC transmit signal voltage a grounded 2-wire impedance for controlling 2-wire return loss, a current gain amplifier connected to said grounded 2-wire impedance for increasing the gain of said two combiners in inverse relation to the value of said grounded 2-wire impedance, said current gain amplifier feeding a current back through said two current mirrors, and in which said two current mirrors, said two combiners, said converter, and said current gain block are in a single integrated circuit.

*FIG. 1*
(PRIOR ART)

FIG. 2

(PRIOR ART)

FIG. 3

ON CHIP

$V_{TIP}$

$V_{RING}$

V/I

$I_{TIP}$

$I_{RING}$

S1

Σ

I/V

18

V/I

S2

Σ

I/V

$V_{TX}$

V/I

$IR_X$

$R_X$

$V_{RX}$

16

### FIG. 4

(PRIOR ART)

ON CHIP

$V_{TIP}$

$V_{RING}$

V/I

$I_{TIP}$

$I_{RING}$

S3

Σ

I/V

$V_{TX}$

$IR_X$

$R_X$

$V_{RX}$

CM4

### FIG. 5

*FIG. 6*